# EUROPÄISCHE PATENTSCHRIFT

(11) **EP 0 967 127 B1**
(45) Veröffentlichungstag und Bekanntmachung des Hinweises auf die Patenterteilung: **08.10.2003**
(21) Anmeldenummer: 99109146.3
(22) Anmeldetag: 08.05.1999
(51) Int. Cl.: B60R 21/20

(54) **Instrumententafel für ein Kraftfahrzeug**
Instrument panel for a motor vehicle
Planche de bord pour un véhicule automobile

(30) Priorität: 24.06.1998 DE 19828001
(43) Veröffentlichungstag der Anmeldung: 29.12.1999
(73) Patentinhaber: DaimlerChrysler AG, 70567 Stuttgart (DE)
(72) Erfinder: Henkel, Jörg, 73033 Göppingen (DE); Müller, Manfred, 73779 Deizisau (DE); Rudolf, Harald, 72072 Tübingen (DE)

(56) Entgegenhaltungen:
- WO-A-95/24328
- DE-C- 4 311 241
- US-A- 5 456 490

## Beschreibung

Die Erfindung betrifft eine Instrumententafel für ein Kraftfahrzeug, insbesondere für einen Personenkraftwagen, mit einem schalenartigen Trägerformteil, sowie mit einer in dem Trägerformteil integrierten Abdeckung, die eine Durchtrittsöffnung für einen Beifahrerairbag verschließt, und die sich bei einer schlagartigen Entfaltung des Beifahrerairbags zumindest teilweise von dem Trägerformteil löst, wobei die Abdeckung mit Hilfe mehrerer, über ihren Umfang verteilter Stege mit dem Trägerformteil in Verbindung steht, die außerhalb der Kontur der Durchtrittsöffnung positioniert sind.

Eine solche Instrumententafel ist aus der gattungsbildenden DE 43 11 241 C1 bekannt. Die Instrumententafel weist ein schalenförmiges und aus einem faserverstärkten Kunststoff hergestelltes Trägerformteil auf, das sich über die gesamte Breite des Fahrzeuginnenraumes erstreckt, und in dem auf einer Beifahrerseite eine Abdeckung für eine Durchtrittsöffnung eines Beifahrerairbags integriert ist. Die Abdeckung ist über Stege einstückig mit dem Trägerformteil verbunden, die sich außerhalb der Kontur einer Durchtrittsöffnung für die Entfaltung des Beifahrerairbags befinden. Dabei sind an einem die Durchtrittsöffnung flankierenden Rand des Trägerformteiles korrespondierende Aussparungen vorgesehen, in die die Stege hineinragen und an deren Grund die Stege in das Trägerformteil übergehen. Die Stege weisen auf ihre gesamte Länge jeweils die gleiche Breite auf. Bei einer schlagartigen Entfaltung des Beifahrerairbags wird die Abdeckung nach außen gedrückt, wodurch die Stege abbrechen. Es ist jedoch möglich, daß bei einer solchen Entfaltung des Beifahrerairbags die Stege bereits an der Abdeckung abbrechen, so daß am Rand des Trägerformteiles verbleibende Stegreste gegebenenfalls zu einer Beschädigung des sich entfaltenden Beifahrerairbags führen können.

Aus der US 5,456,490 A ist eine Instrumententafel für ein Kraftfahrzeug bekannt, die ein Trägerformteil und eine darin integrierte Abdeckung aufeist. Um ein Öffnen der Abdeckung zu gewährleisten, weist das Trägerformteil Bereiche mit verringerter Wandstärke auf.

Aufgabe der Erfindung ist es, eine Instrumententafel der eingangs genannten Art zu schaffen, die zuverlässig eine Beschädigung des Beifahrerairbags bei seiner schlagartigen Entfaltung verhindert.

Diese Aufgabe wird bei einer gattungsgemaßen Instrumententafel dadurch gelöst, daß die Wandstärke des Trägerformteiles zumindest abschnittsweise im Bereich der Stege verringert ist und die Stege durch sich von der Abdeckung aus zum Rand des Trägerformteils hin verjüngende Verbindungsbereiche gebildet sind. Die Erfindung geht dabei davon aus, daß die Abdeckung einstückig zusammen mit dem schalenartigen Trägerformteil hergestellt wird. Durch die zumindest abschnittsweise Reduzierung der Wandstärke im Bereich der Stege wird eine Materialschwächung erzielt, die bei einer Entfaltung des Airbags und einem Aufdrücken der Abdeckung zwangsläufig und zuverlässig ein Brechen der Stege in diesen Bereichen mit reduzierter Wandstärke erzielt. Da sich die Stege und damit auch die Bereiche reduzierter Wandstärke außerhalb der Kontur der Durchtrittsöffnung für den Beifahrerairbag befinden, wird in jedem Fall eine Beschädigung des Beifahrerairbags durch Stegreste vermieden. Die Bereiche reduzierter Wandstärke bilden somit definierte Sollbruchstellen. Da die Abdeckung in dem Trägerformteil integriert ist und somit einstückig mit dem Trägerformteil hergestellt wird, weist die Abdeckung grundsätzlich die gleiche Wandstärke auf wie das Trägerformteil. Dadurch, dass die Stege durch sich von der Abdeckung aus zum Rand des Trägerformteiles hin verjüngende Verbindungsbereiche gebildet sind, wird die Schaffung definierter Sollbruchstellen außerhalb der Kontur der Durchtrittsöffnung weiter verbessert. Die Sollbruchstelle befindet sich im schmalsten Abschnitt jedes Steges und damit in jedem Fall an einem von der Abdeckung entfernten Punkt.

In Ausgestaltung der Erfindung ist die Verringerung der Wandstärke durch einen linearen Übergangsbereich gebildet. Dadurch wird gewährleistet, daß definiert im Bereich der bereits reduzierten Wandstärke die Materialschwächung und damit die Sollbruchstelle gebildet wird.

In weiterer Ausgestaltung der Erfindung ist die Wandstärke des Trägerformteiles in einem umlaufenden, die Abdeckung umschließenden und die Stege aufnehmenden Ringbereich gegenüber der Wandstärke der Abdeckung und des Trägerformteiles verringert. Durch die dünnere Gestaltung des umlaufenden Ringbereiches ist der Bereich mit reduzierter Wandstärke besonders einfach herstellbar, wobei dieser Bereich gemeinsam mit der Herstellung des Trägerformteiles und der Abdeckung in einem Arbeitsgang geschaffen wird. Wie auch beim Stand der Technik ist das Trägerformteil einschließlich der Abdeckung aus einem insbesondere faserverstärktem Kunststoffmaterial, vorzugsweise aus PC/ABS hergestellt.

Weitere Vorteile und Merkmale der Erfindung ergeben sich aus den Unteransprüchen. Nachfolgend ist ein bevorzugtes Ausführungsbeispiel der Erfindung beschrieben und anhand der Zeichnungen dargstellt.
- Fig. 1: zeigt in perspektivischer Darstellung eine Ausführungsform einer erfindungsgemäßen Instrumententafel im Bereich einer Beifahrerseite,
- Fig. 2: in vergrößerter, schematischer Darstellung die Instrumententafel nach Fig. 1 im Bereich einer eine Durchtrittsöffnung für einen Beifahrerairbag verschließenden Abdeckung,
- Fig. 3: einen Schnitt durch die Instrumententafel längs der Schnittlinie III-III in Fig. 2,
- Fig. 4: einen weiteren Schnitt durch die Instrumententafel nach Fig. 2 entlang der Schnittlinie IV-IV in Fig. 2,
- Fig. 5: in vergrößerter Darstellung einen Ausschnitt in einem Randbereich der Durchtrittsöffnung auf Höhe eines die Abdeckung mit dem Rand verbindenden Steges, und
- Fig. 6: einen Querschnitt durch den Steg nach Fig. 5 entlang der Schnittlinie VI-VI in Fig. 5.

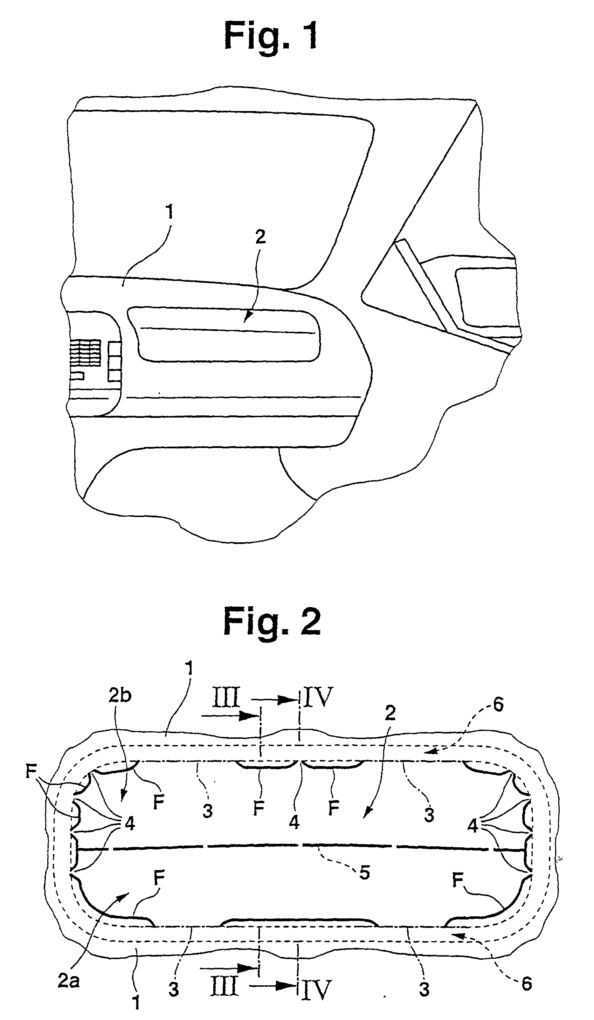

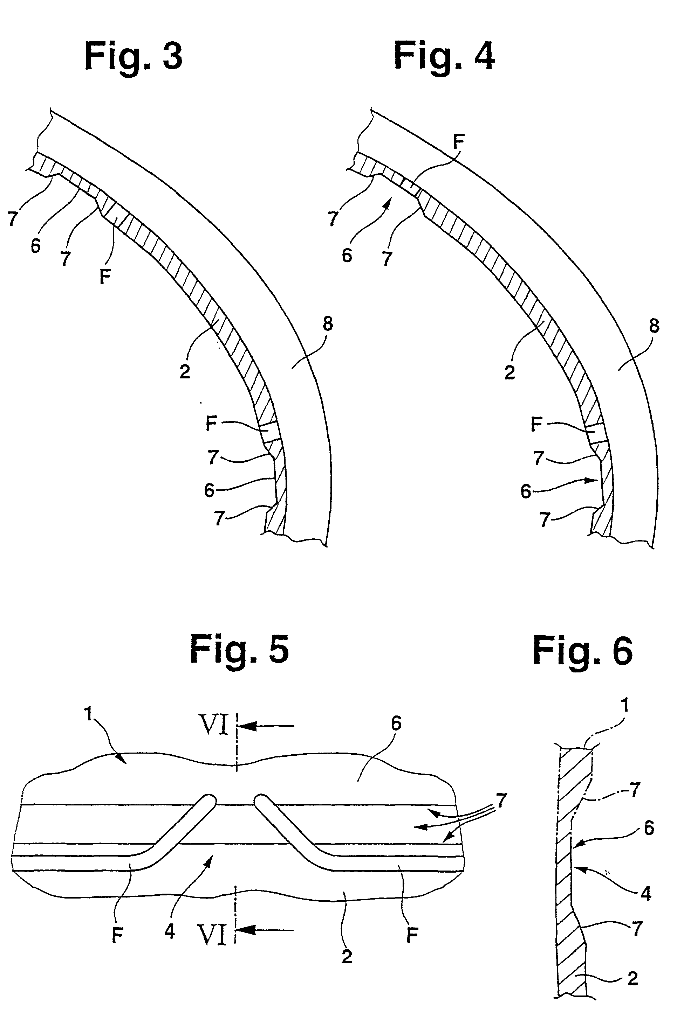

Eine Instrumententafel 1 für einen Personenkraftwagen ist gemäß Fig. 1 unterhalb einer Windschutzscheibe in einem Fahrzeuginnenraum angeordnet und erstreckt sich über die gesamte Breite des Fahrzeuginnenraumes. Die Instrumententafel weist ein formstabiles und schalenförmiges Trägerformteil 1 auf, in dem auf einer Beifahrerseite eine zweiteilige Abdeckung 2 integriert ist. Die Abdeckung 2 dient zum Verschließen einer Durchtrittsöffnung für die Entfaltung eines Beifahrerairbags, der unterhalb des Trägerformteiles 1 auf der Beifahrerseite angeordnet ist. Die Abdekkung 2 ist einstückig mit dem Trägerformteil 1 hergestellt und weist die gleiche Wandstärke wie das Trägerformteil 1 auf. Sowohl das Trägerformteil 1 als auch die Abdeckung 2 sind auf ihrer Oberfläche mit einer Schaumpolsterung 8 kaschiert, wie anhand der Fig. 3 und 4 erkennbar ist. Diese bildet bei einer Entfaltung des Beifahrerairbags und einem Aufdrücken der Abdeckung 2 jedoch keinen nennenswerten Widerstand. Die Abdeckung 2 ist durch zwei Klappen 2a, 2b dargestellt, die jeweils über breite Scharnierstege 3 mit einem die Durchtrittsöffnung umgebenden Rand des Trägerformteiles 1 verbunden sind. Im Bereich der Scharnierstege 3 sind zusätzliche Blechstreifen eingebracht, die ein Aufschwenken der beiden Klappenteile 2a, 2b um die durch die oberen Scharnierstege 3 bzw. durch die unteren Scharnierstege 3 definierten Scharnierachsen gewährleistet. Die beiden Klappenteile 2a, 2b sind durch eine etwa horizontal verlaufende Sollbruchlinie 5 miteinander verbunden.

Die Abdeckung 2 ist zusätzlich zu den stationären Scharnierstegen 3 im übrigen Umfangsbereich der Abdeckung 2 mittels mehrerer, nach außen abragender Stege 4 mit dem Rand des Trägerformteiles 1 einstückig verbunden. Zwischen diesen Stegen 4 und den Scharnierstegen 3 ist die Abdeckung 2 durch entsprechenden Fräsbeschnitt F von dem Trägerformteil 1 getrennt.

Das Trägerformteil 1 und damit auch die Abdeckung 2 sind aus einem Kunststoffmaterial hergestellt, das relativ spröde ist und scharfkantig bricht. Vorzugsweise wird hierzu PC/ABS oder ein anders gestalteter, faserverstärkter Kunststoff vorgesehen. Der Fräsbeschnitt F, der einen das Trägerformteil 1 von der Abdekkung 2 nahezu umlaufend trennenden Schnittbereich darstellt, definiert zum einen die Kontur der Durchtrittsöffnung für den Beifahrerairbag und zum anderen den Rand der Abdeckung 2. Der Fräsbeschnitt F endet zum einen im Bereich der Scharnierstege 3 und zum anderen im Bereich der Stege 4, so daß die Abdeckung 2 in diesen Bereichen mit dem Trägerformteil 1, d.h. dessen Rand, verbunden bleibt. Wie insbesondere anhand der Fig. 5 gut erkennbar ist, bilden die Trennschnitte des Fräsbeschnittes F die Stege 4, indem sie auf Höhe der Stege 4 schräg nach außen gerichtet sind und aufeinander zulaufen. Zwischen der Abdeckung 2 und dem Trägerformteil 1 entsteht somit ein trapezförmiger Verbindungsbereich, der gleichzeitig den jeweiligen Steg 4 darstellt. Die Sollbruchstelle ist durch die schmalste Stelle des Steges 4 und damit auf Höhe der gegenüberliegenden Enden der Trennschnitte des Fräsbeschnittes F definiert. Die Breite jedes Steges 4 auf Höhe der Sollbruchstelle ist weniger als halb so breit wie die Breite des Steges 4 und damit des Verbindungsbereiches am Grund des Steges 4 und damit auf Höhe der durch den Fräsbeschnitt F definierten Kontur der Durchtrittsöffnung. Der Grund jedes Steges 4 befindet sich somit gleichzeitig auf Höhe des Randes der Abdeckung.

Zusätzlich ist ein Randbereich 6 des Trägerformteiles 1, der als die Abdeckung 2 umlaufend umschließender Ringbereich gestaltet ist, mit einer gegenüber den übrigen Bereichen des Trägerformteiles 1 und der Abdeckung 2 reduzierten Wandstärke versehen. Die Wandstärke ist dabei etwa auf die Hälfte der Dicke der übrigen Wandstärke der Abdeckung 2 und des Trägerformteiles 1 verjüngt. Die Verjüngung erfolgt durch lineare Übergangsbereiche 7 sowohl von der Abdeckung 2 aus als auch vom Trägerformteil 1 aus (Fig. 3, 4 und 6). Damit befindet sich die Sollbruchstelle jedes Steges 4 im Randbereich 6 mit reduzierter Wandstärke, wobei der Steg 4 jeweils auf Höhe des Übergangsbereiches 7 liegt. Die reduzierte Wandstärke schafft zusätzlich zu der Verjüngung der Breite jedes Steges 4 eine zusätzliche Schwächung des Kunststoffmaterials im Bereich jeder Sollbruchstelle jedes Steges 4, so daß bei einer schlagartigen Expansion des Beifahrerairbags die Abdeckung 2, d.h. die beiden Klappenteile 2a, 2b zuverlässig im Bereich der Sollbruchstellen der Stege 4 brechen werden.

Da die Sollbruchstellen sich im Bereich der Spitzen der Stege 4 befinden, werden die Stege 4 gemeinsam mit der Abdeckung 2, d.h. mit den Klappenteilen 2a, 2b, bei einer schlagartigen Expansion des Beifahrerairbags nach außen geschwenkt, wodurch sie die freie Entfaltung des Beifahrerairbags nicht behindern. Auf Höhe der Stege 4 verbleiben im Bereich der Durchtrittsöffnung trapezartige Aussparungen, wobei lediglich jeder Grund jeder Aussparung mit einer scharfkantigen Bruchstelle versehen ist, die jedoch außerhalb der Kontur der Durchtrittsöffnung positioniert ist und somit den Durchtritt des Beifahrerairbags nicht im Wege steht. Die jeweils vorderen Ecken jeder Aussparung auf Höhe der Kontur der Durchtrittsöffnung sind mittels des Fräsbeschnittes F abgerundet gestaltet, wie anhand der Fig. 5 erkennbar ist. Ein unbeabsichtigtes Brechen der Stege 4 in einem mehr zur Abdeckung 2 hin gewandten Bereich wird durch die breite Gestaltung der Stege 4 an ihrem Grund sowie die gegenüber der Spitze jedes Steges 4 größere Wandstärke sicher verhindert, so daß in jedem Fall die gewünschten Bruchstellen außerhalb der Kontur der Durchtrittsöffnung entstehen werden.

## Patentansprüche

1. Instrumententafel für ein Kraftfahrzeug, insbesondere für einen Personenkraftwagen, mit einem schalenartigen Trägerformteil, sowie mit einer in dem Trägerformteil integrierten Abdeckung, die eine Durchtrittsöffnung für einen Beifahrerairbag verschließt, und die sich bei einer schlagartigen Entfaltung des Beifahrerairbags zumindest teilweise von dem Trägerformteil löst, wobei die Abdeckung mit Hilfe mehrerer, über ihren Umfang verteilter Stege mit dem Trägerformteil in Verbindung steht, die außerhalb der Kontur der Durchtrittsöffnung positioniert sind, **dadurch gekennzeichnet, daß** die Wandstärke des Trägerformteiles zumindest abschnittsweise im Bereich der Stege verringert ist und
daß die Stege (4) durch sich von der Abdeckung (2) aus zum Rand des Trägerformteiles (1) hin verjüngende Verbindungsbereiche gebildet sind.

2. Instrumententafel nach Anspruch 1,
**dadurch gekennzeichnet,**
**daß** die Verringerung der Wandstärke durch einen linearen Übergangsbereich (7) gebildet ist.

3. Instrumententafel nach Anspruch 1 oder 2,
**dadurch gekennzeichnet,**
**daß** die Wandstärke des Trägerformteiles (1) in einem umlaufenden, die Abdeckung (2) umschließenden und die Stege (4) aufnehmenden Ringbereich (6) gegenüber der Wandstärke der Abdeckung (2) und des Trägerformteiles (1) verringert ist.

4. Instrumententafel nach Anspruch 1,
**dadurch gekennzeichnet,**
**daß** die Verjüngung trapezartig verläuft.

5. Instrumententafel nach Anspruch 1 oder 4,
**dadurch gekennzeichnet,**
**daß** ein Grund jedes Verbindungsbereiches wenigstens doppelt so breit ist wie seine zum Trägerformteil hin gewandte Spitze.

## Claims

1. An instrument panel for a motor vehicle, in particular for a motor car, having a convex moulded shell and a cover integrated in said moulded shell which closes a deployment opening for a passenger air bag and which in the event of the abrupt deployment of the passenger air bag detaches itself at least partially from the moulded shell, the cover being connected to the moulded shell by several webs distributed about its periphery which are positioned outside the contour of the deployment opening,
**characterised in that**
the wall thickness of the moulded shell is reduced in at least certain sections in the area of the webs and the webs (4) take the form of connecting areas which taper from the cover (2) towards the edge of the moulded shell (1).

2. An instrument panel in accordance with claim 1,
**characterised in that**
the reduction of the wall thickness is achieved by means of a linear transitional area (7).

3. An instrument panel in accordance with claim 1 or 2,
**characterised in that**
the wall thickness of a peripheral ring-shaped area of the moulded shell (1) which encloses the cover (2) and encompasses the webs (4) is reduced to less than the wall thickness of the cover (2) and the moulded shelf (1).

4. An instrument panel in accordance with claim 1,
**characterised in that**
the tapered area is trapezoidal.

5. An instrument panel in accordance with claim 1 or 4,
**characterised in that**
a base of each connecting area is at least twice as wide as its point facing the moulded shell (1).

## Revendications

1. Tableau de bord pour un véhicule automobile, en particulier pour une voiture particulière, avec une pièce moulée formant support de type coque, ainsi qu'avec un couvercle intégré dans la pièce moulée formant support, qui ferme une ouverture de pénétration pour un airbag passager, et qui se détache au moins en partie de la pièce moulée formant support lors d'un déploiement brusque de l'airbag passager, moyennant quoi le couvercle est relié à la pièce moulée formant support à l'aide de plusieurs tiges réparties sur son périmètre, qui sont positionnées à l'extérieur du contour de l'ouverture de pénétration,
**caractérisé en ce que** l'épaisseur de paroi de la pièce moulée formant support est réduite au moins par sections au niveau des tiges et **en ce que** les tiges (4) sont formées par l'intermédiaire de zones de liaison convergeant du couvercle (2) vers le bord de la pièce moulée formant support (1).

2. Tableau de bord selon la revendication 1, **caractérisé en ce que**
la réduction de l'épaisseur de la paroi est formée par l'intermédiaire d'une zone de transition linéaire (7).

3. Tableau de bord selon la revendication 2 ou 3, **caractérisé en ce que**
l'épaisseur de paroi de la pièce moulée formant support (1) est réduite dans une zone annulaire (6) rotative, entourant le couvercle (2) et recevant les tiges (4) par rapport à l'épaisseur de paroi du couvercle (2) et de la pièce moulée formant support (1).

4. Tableau de bord selon la revendication 1, **caractérisé en ce que**
la conicité est de type trapézoïdal.

5. Tableau de bord selon la revendication 1 ou 4, **caractérisé en ce qu'**
une base de chaque zone de liaison est au moins deux fois plus large que sa pointe tournée vers la pièce moulée formant support.
